# EUROPÄISCHE PATENTSCHRIFT

(11) **EP 0 821 647 B1**
(45) Veröffentlichungstag und Bekanntmachung des Hinweises auf die Patenterteilung: **10.01.2001**
(21) Anmeldenummer: 97906805.3
(22) Anmeldetag: 19.02.1997
(51) Int. Cl.: B29C 67/00

(54) **VORRICHTUNG UND VERFAHREN ZUM HERSTELLEN EINES DREIDIMENSIONALEN OBJEKTES**
DEVICE AND METHOD FOR PRODUCING THREE-DIMENSIONAL OBJECTS
DISPOSITIF ET PROCEDE POUR FABRIQUER DES OBJETS TRIDIMENSIONNELS

(30) Priorität: 20.02.1996 DE 19606128
(43) Veröffentlichungstag der Anmeldung: 04.02.1998
(73) Patentinhaber: EOS GmbH ELECTRO OPTICAL SYSTEMS, 82152 Planegg (DE)
(72) Erfinder: LOHNER, Andreas, D-80798 Haar (DE); WILKENING, Christian, D-86911 Diessen (DE)
(74) Vertreter: Prüfer, Lutz H., Dipl.-Phys.
(86) Internationale Anmeldenummer: EP9700787
(87) Internationale Veröffentlichungsnummer: WO9730836

(56) Entgegenhaltungen:
- EP-A- 0 393 677
- EP-A- 0 590 956
- EP-A- 0 609 772
- DE-A- 4 416 901
- DE-C- 4 309 524

## Beschreibung

Die vorliegende Erfindung bezieht sich auf ein Verfahren und eine Vorrichtung zum Herstellen eines dreidimensionalen Objektes nach dem Oberbegriff des Patentanspruches 1 oder 11.

Beim Herstellen eines dreidimensionalen Objektes mittels Rapid Prototyping wird eine verfestigbare Substanz schichtweise auf einen Träger bzw. eine vorhergehende Schicht aufgetragen und in jeder Schicht mittels Strahlung, beispielsweise in Form eines gebündelten Lichtstrahls an den dem Querschnitt des Objekts entsprechenden Stellen der Schicht verfestigt. Ist das verwendete Material pulverförmig und wird mittels Laserstrahlen verfestigt, dann wird das Verfahren Lasersintern genannt. Ein solches Verfahren ist beispielsweise aus der US 4,863,538 bekannt. Wird flüssiges photoaushärtbares Material verwendet, dann wird das Verfahren Stereolithographie genannt. Ein solches Verfahren ist beispielsweise aus der US 5,014,207 bekannt.

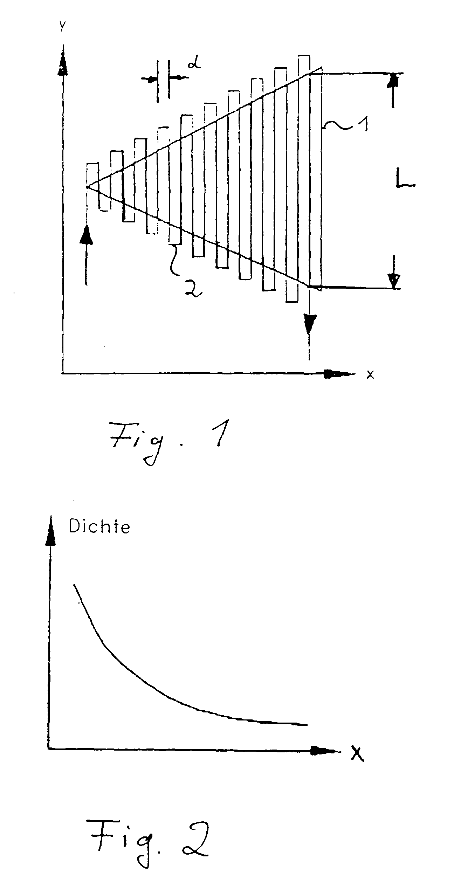

Der Anmelderin ist es bekannt, beim Lasersinterverfahren den Laserstrahl über die zu verfestigende Schicht in einem Linienmuster, beispielsweise in Mäanderform zu führen, wie es in Fig. 1 gezeigt ist.

Fig. 1 stellt eine Draufsicht auf eine zu verfestigende Schicht 1 eines zu bildenden dreidimensionalen Objektes in einem Koordinatensystem mit x- und y-Richtung dar. Bei dem Verfahren wird ein von der Geometrie der Schicht abhängendes Linienmuster 2 ermittelt. Das Linienmuster 2 weist parallel in einem Abstand d zueinander verlaufende Linien auf. Zum Verfestigen der Schicht 1 wird der Laserstrahl in der durch den Pfeil gekennzeichneten Richtung auf der Oberfläche der zu verfestigenden Schicht 1 entlang des Linienmusters 2 mit konstanter Geschwindingkeit v geführt. Aufgrund der Unregelmäßigkeit des Objektquerschnitts in dieser Schicht haben die Linien unterschiedliche Länge L.

Fig. 2 zeigt den Verlauf der Dichte der verfestigten Schicht in Abhängigkeit von der Geometrie der Schicht, d.h. indirekt in Abhängigkeit von der Länge der Linien, entlang derer der Laserstrahl geführt wurde. Es zeigt sich, daß mit zunehmender Länge der Linien die Dichte der verfestigten Schicht abnimmt. Insgesamt führt also dieses Verfahren zu einer inhomogenen Dichteverteilung in der verfestigten Schicht, wenn das Linienmuster, entlang dessen der Strahl zum Verfestigen der Schicht geführt wird, Linien unterschiedlicher Länge aufweist und der Strahl die Schicht mit konstanter Geschwindigkeit überstreicht.

Für das Zustandekommen der in Fig. 2 gezeigten inhomogenen Dichteverteilung in Abhängigkeit von der Länge der Linien des Linienmusters 2 ergibt sich die folgende Erklärung: Im allgemeinen ist der Abstand d der Linien des Linienmusters zwei- bis vierfach kleiner als der Durchmesser des Laserstrahlquerschnittes auf der Oberfläche der zu verfestigenden Schicht 1. Daher kann ein Abschnitt auf einer Linie bis zu fünfmal bestrahlt werden, wenn der Querschnitt des Strahles entlang benachbarter Linien geführt wird. Bei einer geringen Linienlänge erfolgt demzufolge die Bestrahlung eines Abschnittes dieser Linie in schneller zeitlicher Folge. Hierdurch kann ein solcher Abschnitt nahezu kontinuierlich auf einer Temperatur gehalten werden, die größer oder gleich der Sintertemperatur ist. Wärmeleitungsverluste werden durch die schnelle zeitliche Abfolge der Bestrahlung ausgeglichen. Damit ist der Eintrag der direkt zum Sintern beitragenden Energie in einem solchen Abschnitt hoch, das zu sinternde Material weist einen hohen Flüssigphasenanteil auf. In einem solchen Abschnitt entsteht bei der Verfestigung eine hohe Dichte.

Wird der Strahl dagegen entlang einer langen Linie geführt, so kühlt ein Abschnitt entlang dieser Linie aufgrund von Wärmeleitungsverlusten, nachdem der Strahlquerschnitt diesen Abschnitt überstrichen hat, wieder auf seine ursprüngliche Temperatur ab. Beim erneuten Überstreichen dieses Abschnittes muß dieser wieder auf die Sintertemperatur erwärmt werden. Damit können in einem solchen Abschnitt Wärmeleitungs- und Wiedererwärmungsverluste nicht ausgeglichen werden und es entsteht eine Verfestigung mit einer Dichte, die geringer als die Dichte der Substanz in dem Abschnitt mit der kleineren Linienlänge ist.

Eine derartige inhomogene Dichteverteilung innerhalb der verfestigten Schicht und damit innerhalb eines zu bildenden dreidimensionalen Objektes führt während der Belichtung zu mechanischen Eigenspannungen, die zu einem Verzug und damit einem Verlust der Herstellungsgenauigkeit des zu bildenden dreidimensionalen Objektes führen.

Aus der EP 0 393 677 A ist ein Verfahren zum Herstellen eines dreidimensionalen Objektes nach dem Oberbegriff des Anspruches 1 und eine Vorrichtung nach dem Oberbegriff des Anspruches 11 bekannt.

Aus der DE 43 09 524 C2, der EP 0 590 956 A1 und DE 44 16 901 A1 ist jeweils ein Verfahren nach dem Oberbegriff des Anspruches 1 bekannt.

Aus der EP 0 609 772 A1 ist ein Verfahren nach dem Oberbegriff des Anspruches 1 sowie eine Vorrichtung nach dem Oberbegriff des Anspruches 11 bekannt.

Die Aufgabe der vorliegenden Erfindung besteht darin, ein Verfahren und eine Vorrichtung zum Herstellen eines dreidimensionalen Objektes mittels Rapid Prototyping anzugeben, bei denen eine homogene Dichteverteilung in einem zu bildenden dreidimensionalen Objekt auch dann gewährleistet ist, wenn das Objekt aus Schichten mit beliebigen Querschnittsgeometrien gebildet wird, und bei der Belichtung Linienmuster verwendet werden, die Linien unterschiedlicher Länge aufweisen.

Diese Aufgabe wird durch ein Verfahren nach Anspruch 1 oder eine Vorrichtung nach Anspruch 11 gelöst. Weiterbildungen der Erfindung sind in den Unteransprüchen angegeben.

Durch das erfindungsgemäße Verfahren kann auf sehr einfache Weise erreicht werden, daß ein dreidimensionales Objekt bei beliebiger Gestaltung eine homogene Dichteverteilung aufweist.

In einer bevorzugten Ausgestaltung des Verfahrens nimmt die Geschwindigkeit v, mit der der Strahl über die Linien des Linienmusters 2 geführt wird, mit zunehmender Linienlänge ab. Hierdurch wird gewährleistet, daß Verluste, die sich aus dem Abfluß der Wärme und der damit notwendigen Wiederaufheizung ergeben, ausgeglichen werden und somit die Ausbildung einer homogenen Dichteverteilung gewährleistet werden kann.

Weitere Merkmale und Zweckmäßigkeiten der Erfindung ergeben sich aus der folgenden Beschreibung von Ausführungsformen anhand der Figuren.

Die Figuren zeigen
- Fig. 1: eine schematische Draufsicht auf eine zu verfestigende Schicht und das bei der Belichtung verwendete Linienmuster,
- Fig. 2: ein Schaubild zur Erläuterung des Zusammenhangs zwischen der Schichtgeometrie und der Dichteverteilung,
- Fig. 3: eine schematischen Ansicht des Aufbaus einer Vorrichtung zum Herstellen eines dreidimensionalen Objektes mittels eines Lasersinterverfahrens, und
- Fig. 4a - 4c: Schaubilder zur Erläuterung der Abhängigkeit der Linienlänge L, der Strahlgeschwindigkeit v und der Dichteverteilung jeweils von der Schichtgeometrie x.

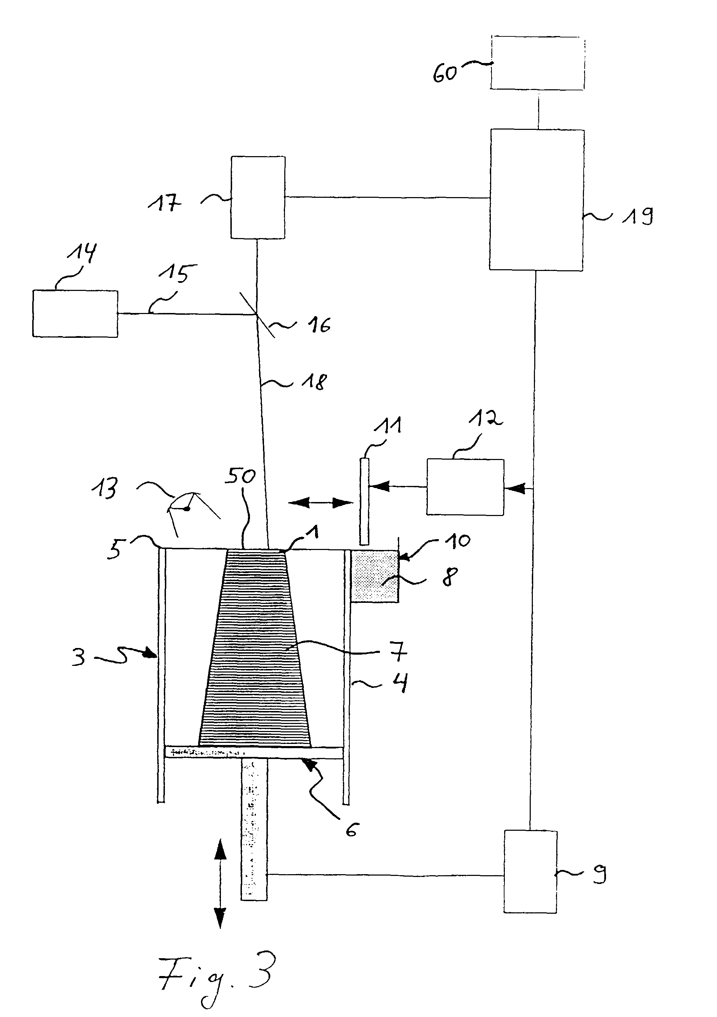

Wie aus Fig. 3 ersichtlich ist, weist die Vorrichtung einen Behälter 3 auf, der nur durch eine in Umfangsrichtung geschlossene Seitenwand 4 gebildet wird. Durch den oberen Rand 5 der Seitenwand 4 bzw. des Behälters 3 ist eine Arbeitsebene 50 definiert. In dem Behälter 3 ist ein Träger 6 zum Tragen eines zu bildenden Objektes 7 angeordnet. Das Objekt 7 befindet sich auf der Oberseite des Trägers 6 und ist aus einer Mehrzahl von sich parallel zu der Oberseite des Trägers 6 erstreckenden Schichten gebildet. Diese Schichten sind aus einem mittels elektromagnetischer Strahlung verfestigbaren pulverförmigen Aufbaumaterials 8 in der später beschriebenen Weise gebildet. Der Träger 6 ist über eine Höheneinstellvorrichtung 9 in vertikaler Richtung, d.h. parallel zu der Seitenwand 4 des Behälters 3 verschiebbar. Damit kann die Position des Trägers 6 relativ zur Arbeitsebene 50 eingestellt werden.

Seitlich an dem Behälter 3 ist ein an seiner Oberseite offener Vorratsbehälter 10 für das Aufbaumaterial 8 vorgesehen. Der Vorratsbehälter 10 ist mit dem pulverförmigen Aufbaumaterial 8 stets bis etwas über den an den Behälter 3 angrenzenden oberen Rand 5 gefüllt. Um dies zu gewährleisten, ist ein in Fig. 3 nicht dargestellter Stempel bzw. ein verschiebbarer Boden, ähnlich dem Träger 6 vorgesehen, der in dem Vorratsbehälter 10 in vertikaler Richtung verschiebbar ist.

Als pulverförmiges Aufbaumaterial 8 wird insbesondere Metallpulver, Keramikpulver oder Kunststoffpulver verwendet. Auch kunststoffummanteltes Metall- bzw. Keramikpulver oder Formsand bestehend aus Quarzsand mit einem Überzug aus Kunstharz kann verwendet werden.

Oberhalb des Behälters 3 bzw. der Arbeitsebene 50 ist ein Beschichter 11 angeordnet, dessen Unterkante in der Arbeitsebene 50 liegt. Dieser Beschichter 12 dient zum Aufbringen des Aufbaumaterials 8 auf die Oberseite des Trägers 6 bzw. eine zuvor gebildete Schicht des zu bildenden Objektes 7. Der Beschichter 11 ist von einer ersten Position über dem Vorratsbehälter 10 quer über den Behälter 3 bis zu einer dem Vorratsbehälter gegenüber liegenden zweiten Position parallel zu dem oberen Rand 5 des Behälters 3 und wieder zurück mittels einer Verschiebevorrichtung 12 verschiebbar.

Oberhalb des Behälters 3 bzw. der Arbeitsebene 50 ist eine in Fig. 3 nur schematisch dargestellte Heizeinrichtung 13 vorgesehen. Die Heizeinrichtung 13 dient zum Aufheizen der mit dem Beschichter 11 aufgetragenen Pulverschicht auf eine für die Sinterung mittels des Laserstrahls erforderliche Vortemperatur.

Ferner ist oberhalb des Behälters 3 bzw. der Arbeitsebene 50 eine Vorrichtung 14 zum Verfestigen der an die Arbeitsebene 50 angrenzenden jeweils oberste Schicht 1 des Objektes 7 vorgesehen. Die Vorrichtung 14 weist eine Strahlungsquelle in Form einers Lasers auf, der einen gebündelten Lichtstrahl 15 erzeugt. Etwa mittig oberhalb des Behälters 3 ist ein Umlenkspiegel 16 angeordnet, der kardanisch aufgehängt ist und von einer schematisch angedeuteten Schwenkvorrichtung 17 so geschwenkt werden kann, daß der auf den Spiegel 16 gerichtete Lichtstrahl 15 als reflektierter Lichtstrahl 18 im wesentlichen an jeder Stelle der Arbeitsebene 50 positioniert werden kann.

Die Höheneinstellvorrichtung 9, die Verschiebevorrichtung 12 und die Schwenkvorrichtung 17 sind mit einer gemeinsamen Steuervorrichtung 19 zur zentralen und koordinierten Steuerung dieser Vorrichtungen verbunden. Die Steuervorrichtung 19 ist mit einem Computer 60 verbunden. Die Steuerung 19 ist so ausgebildet, daß sie die Schwenkvorrichtung 17 für den Umlenkspiegel 16 entsprechend einem vorgegebenen Linienmuster 2 zur Ablenkung des Laserstrahls mit vorgegebenen Geschwindigkeiten v steuern kann.

Bei der Herstellung eines dreidimensionalen Objektes werden zunächst in dem mit der Steuerung 19 gekoppelten Computer mit einem Konstruktionsprogramm Daten über die Form des Objektes 7 erstellt. Diese Daten werden für die Herstellung des Objektes 7 so aufbereitet, daß das Objekt in eine Vielzahl von horizontalen, im Vergleich zu der Objektdimension dünnen Schichten mit einer Dicke von beispielsweise 0,1 - 1,0mm zerlegt wird und die Formdaten für diese Schicht bereitgestellt werden.

Dann werden für jede Schicht die folgenden Schritte durchgeführt.

Der Träger 6 wird mittels der Höheneinstellvorrichtung 9 so in dem Behälter 3 positioniert, daß bei der ersten Schicht seine Oberseite bzw. beim Vorhandensein bereits verfestigter Schichten die Oberseite der zuletzt verfestigten Schicht um eine gewünschte Schichtdicke h unterhalb des Randes 5 des Behälters 3 liegt. Dann wird eine Schicht des Materials 8 mit dem Beschichter 11 von dem Vorratsbehälter 10 auf der Oberseite des Trägers 6 bzw. auf einer vorgebildeten Schicht aufgebracht. Dieses neu aufgebrachte Pulver ist kaltes Pulver aus dem Vorratsbehälter 10 und wird über die Heizeinrichtung 13 auf eine vorbestimmte Vorsintertemperatur gebracht. Wenn die gesamte neu aufgetragene Pulverschicht die zum Sintern erforderliche Temperatur erreicht hat, wird die Schwenkvorrichtung 17 entsprechend den Formdaten für die Schicht derart gesteuert, daß der abgelenkte Lichtstrahl 18 an den auf dem Querschnitt des Objektes 6 entsprechenden Stellen der Schicht auftrifft und dort das Aufbaumaterial 7 verfestigt bzw. sintert. Hierauf wird im folgenden genauer eingegangen.

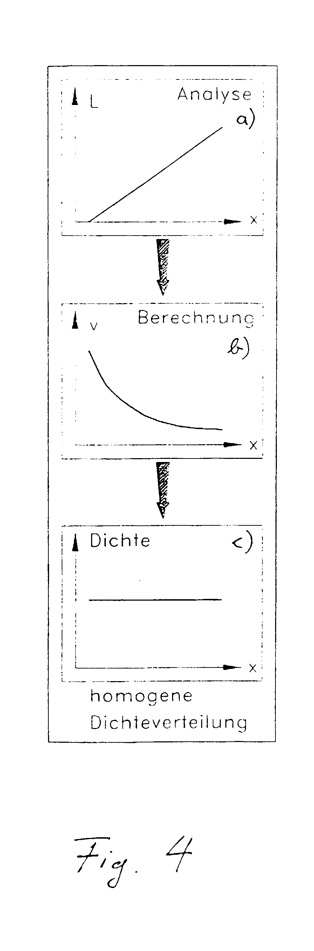

Bei der Aufbereitung der Daten der Geometrie der jeweils herzustellenden dünnen Schichten des zu bildenden dreidimensionalen Objektes 7 wird durch die Steuereinrichtung 19 ein Muster 2 aus Linien bestimmt, entlang derer der Auftreffpunkt des Laserstrahls 18 auf der Oberfläche der zu verfestigenden Schicht 1 in der Arbeitsebene 50 geführt werden soll. Das Linienmuster 2 besteht aus zueinander parallelen Linien mit einem Abstand d, die an ihren Enden so miteinander verbunden sind, daß sich ein mäanderförmiges Muster ergibt. Die Linien werden als Füllinien bezeichnet. Das Linienmuster 2 füllt die zu verfestigende Fläche der Schicht aus. In der Steuereinrichtung 19 oder dem damit gekoppelten Computer 50 werden die verschiedenen Längen L der Linien des Linienmusters 2 ermittelt, entlang derer der Laserstrahl 18 geführt werden soll. Die Analyse der Linienlänge in Abhängigkeit von der Schichtgeometrie in x-Richtung ist in Fig. 4a gezeigt.

Anschließend wird für jede Linie des Linienmusters 2 eine Geschwindigkeit v bestimmt, mit der der Laserstrahl 18 in der Arbeitsebene 50 über die zu verfestigende Schicht 1 entlang der entsprechenden Linie geführt werden soll. Die Zuordnung der Strahlgeschwindigkeiten v zu den Linienlängen L erfolgt dabei derart, daß in der gesamten zu verfestigenden Schicht 1 eine homogene Dichteverteilung erzeugt wird.

Die genaue Bestimmung der zum Erreichen einer homogenen Dichte erforderlichen Geschwindigkeit v in Abhängigkeit von der Linienlänge L erfolgt über eine Wertetabelle, die experimentell bestimmt wird. Die experimentelle Bestimmung der Zuordnung der Geschwindigkeit v zur Linienlänge L erfolgt über das Erzeugen einer Mehrzahl von quaderförmigen Testkörpern mittels des Lasersinterverfahrens, welche dieselbe Breite und Höhe, jedoch unterschiedliche Länge aufweisen. Die Geschwindigkeit des Laserstrahles bei der Belichtung eines jeden Testkörpers wird so gewählt, daß die Testkörper alle die gleiche gewünschte Dichte haben. Damit ist eine Zuordnung zwischen der Länge eines Testkörpers und der erforderlichen Geschwindigkeit gegeben. Zwischen den Punkten der Wertetabelle wird dann interpoliert.

Die zum Erreichen einer homogenen Dichte erforderliche Strahl-geschwindigkeitsverteilung für das in Fig. 1 dargestellte Linienmuster 2 ist in Fig. 4b dargestellt. Fig. 4c zeigt die hieraus resultierende homogene Dichteverteilung.

Bei dem oben beschriebenen Verfahren wird einer kurzen Linie eine höhere Geschwindigkeit zugeordnet als einer langen Linie.

Durch die näherungsweise zur Linienlänge L umgekehrt proportionale Strahlgeschwindigkeit v ist gewährleistet, daß an jedem Ort des zu verfestigenden Schichtbereiches der zum Erreichen einer homogenen Dichteverteilung geeignete Energieeintrag durch den Laserstrahl gegeben ist.

Im folgenden wird nun ein alternatives Verfahren zum Erreichen einer homogenen Dichteverteilung beschrieben. Es wird wieder auf das bei der Aufbereitung der Daten über die Form der zu verfestigenden Schicht 1 verwendete Linienmuster 2, wie es in Fig. 1 dargestellt ist, Bezug genommen. Die Schicht 1 wird dabei in zwei aufeinanderfolgenden Schritten mit jeweils konstanter Geschwindigkeit v des Laserstrahles belichtet. In einem ersten Schritt wird eine Belichtung nach dem Linienmuster 2 mit einem Linienabstand d₁, der größer als der Querschnittsdurchmesser des Laserstrahles ist, durchgeführt. In einem zweiten Schritt wird dieselbe Schicht nochmals einem zweiten Linienmuster 2' mit dem selben Linienabstand d₁ belichtet, wobei aber das zweite Muster 2' um d₁/2 gegenüber dem ersten Linienmuster 2 versetzt ist.

Alternativ kann die Schicht auch in insgesamt N Schritten belichtet werden, wobei das n-te Linienmuster n=2,...N des n-ten Schrittes gegenüber dem vorhergehenden Linienmuster jeweils um den Abstand d₁/N versetzt ist.

Durch dieses Verfahren werden Abschnitte auf angrenzenden Linien selbst dann nicht in schneller zeitlicher Folge überstrichen, wenn die Linien in diesem Bereich kurze Längen aufweisen, da nebeneinanderliegende Linien, die einen Abstand voneinander aufweisen, der geringer ist als der Querschnittsdurchmesser des Laserstrahles, erst im nächsten Schritt belichtet werden. Damit ist der Wärmeleitungsverlust für alle Bereiche der zu verfestigenden Schicht 1 konstant.

Die Erfindung ist nicht auf das in Fig. 1 dargestellte mäanderförmige Linienmuster 2 der Belichtung beschränkt. Es kann auch beispielsweise zuerst eine Konturbelichtung der zur verfestigenden Schicht durchgeführt werden und anschließend die Kontur mit parallelen Schraffurlinien ausgefüllt werden.

Ferner ist die Erfindung nicht auf das Lasersintern beschränkt, sondern kann auch in der Stereolithographie eingesetzt werden.

Der besondere Vorteil der vorliegenden Erfindung besteht darin, daß gewährleistet wird, daß in jedem Abschnitt der zu verfestigenden Schicht die gleichen Anteile der Flüssigphase in dem zu sinternden Material erzeugt werden.

## Patentansprüche

1. Verfahren zum Herstellen eines dreidimensionalen Objektes (7), bei dem das Objekt (7) durch aufeinander folgendes Verfestigen einzelner Schichten (1) eines verfestigbaren Materials (8) an den dem Objektquerschnitt entsprechenden Stellen durch Einwirkung eines Strahls (18) elektromagnetischer Strahlung erzeugt wird, dadurch gekennzeichnet, daß
der Strahl (18) bei der Bestrahlung einer Schicht in einer Mehrzahl von nebeneinanderliegenden Strecken über die Schicht (1) geführt wird, wobei die Geschwindigkeit (v) mit der der Strahl über eine Strecke geführt wird, von der Länge (L) der jeweiligen Strecke abhängt.

2. Verfahren nach Anspruch 1, dadurch gekennzeichnet, daß die Geschwindigkeit (v) des Strahles mit zunehmender Länge (L) der Strecke abnimmt.

3. Verfahren nach Anspruch 1 oder 2, dadurch gekennzeichnet, daß die Strecken zueinander parallele und einen Abstand (d) voneinander aufweisende Linien sind.

4. Verfahren nach Anspruch 3, dadurch gekennzeichnet, daß jeweils zwei Linien miteinander an ihren Endpunkten verbunden sind, so daß sich ein mäanderförmiges Linienmuster (2) ergibt.

5. Verfahren nach einem der Ansprüche 1 bis 4, dadurch gekennzeichnet, daß die Geschwindigkeit (v) für jede Strecke so gewählt wird, daß die Schicht nach der Verfestigung eine homogene Dichte aufweist.

6. Verfahren nach Anspruch 5, dadurch gekennzeichnet, daß die Geschwindigkeit (v) für jede Länge einer Strecke experimentell ermittelt wird, indem eine Mehrzahl von quaderförmigen Testkörpern mit gleicher Höhe und Breite, aber unterschiedlicher Länge unter Verwendung jeweils unterschiedlicher Geschwindigkeiten derart verfestigt werden, daß sie eine gleiche Dichte aufweisen.

7. Verfahren nach Anspruch 6, dadurch gekennzeichnet, daß für eine gewünschte Dichte des herzustellenden Objektes (7) eine Wertetabelle zwischen der Länge (L) und der Geschwindigkeit (v) aufgestellt wird und zwischen den gemessenen Werten interpoliert wird.

8. Verfahren nach einem der Ansprüche 1 bis 7 dadurch gekennzeichnet, daß als verfestigbares Material (8) ein pulverförmiges Material in Form von Metall-, Keramik oder Kunststoffpulver oder Formsand bestehend aus Quarzsand mit einem Kunstharzüberzug verwendet wird.

9. Verfahren nach einem der Ansprüche 1 bis 7, dadurch gekennzeichnet, daß als Material (8) ein lichtaushärtendes Fluid verwendet wird.

10. Verfahren nach einem der Ansprüche 1 bis 9, dadurch gekennzeichnet, daß als Strahl (18) ein Laserstrahl verwendet wird.

11. Vorrichtung zum Durchführen eines Verfahrens nach einem der Ansprüche 1 bis 10, mit:
einem Träger (6) zum Tragen des zu bildenden Objektes (7),
einer Auftragevorrichtung (11) zum Auftragen von Schichten des zu verfestigbaren Materials (8) auf dem Träger (6) oder einer zuvor verfestigten Schicht,
einer Strahlerzeugereinrichtung (14) zum Erzeugen eines Strahls elektromagnetischer Strahlung,
einer Ablenkeinrichtung (16) zum Ablenken des Strahls (15, 18) elektromagnetischer Strahlung auf die Oberfläche (50) der zu verfestigenden Schicht (1),
gekennzeichnet durch
eine Steuereinrichtung (19, 60) zum Steuern der Geschwindigkeit (v) des Strahles (18) in Abhängigkeit von der Länge (L) der jeweils zu überstreichenden Strecke.

## Claims

1. Process for producing a three-dimensional object (7), in which the object (7) is generated by successive solidification of individual layers (1) of a solidifiable material (8) at the locations which correspond to the cross section of the object, by the action of a beam (18) of electromagnetic radiation, characterized in that, during the irradiation of a layer, the beam (18) is guided over the layer (1) in a plurality of adjacent paths, the velocity (v) at which the beam is guided over a path being dependent on the length (L) of the path in question.

2. Process according to Claim 1, characterized in that the velocity (v) of the beam decreases as the length (L) of the path increases.

3. Process according to Claim 1 or 2, characterized in that the paths are lines which are parallel to and at a distance (d) from one another.

4. Process according to Claim 3, characterized in that in each case two lines are connected to one another at their end points, resulting in a meandering pattern of lines (2).

5. Process according to one of Claims 1 to 4, characterized in that the velocity (v) for each path is selected in such a way that the layer has a homogeneous density after solidification.

6. Process according to Claim 5, characterized in that the velocity (v) for each length of a path is determined experimentally, by solidifying a plurality of cuboidal test bodies of the same height and width but different lengths using in each case different velocities, in such a manner that they have the same density.

7. Process according to Claim 6, characterized in that, for a desired density of the object (7) to be produced, a table of values between the length (L) and the velocity (v) is compiled, and interpolation is carried out between the measured values.

8. Process according to one of Claims 1 to 7, characterized in that the solidifiable material (8) used is a pulverulent material in the form of metal, ceramic or plastic powder or moulding sand consisting of silica sand with a synthetic resin coating.

9. Process according to one of Claims 1 to 7, characterized in that the material (8) used is a photocurable fluid.

10. Process according to one of Claims 1 to 9, characterized in that the beam (18) used is a laser beam.

11. Device for carrying out a process according to one of Claims 1 to 10, having:
a support (6) for supporting the object (7) to be formed,
an application device (11) for applying layers of the material (8) to be solidified to the support (6) or a previously solidified layer,
a beam-generating device (14) for generating a beam of electromagnetic radiation,
a diverter device (16) for diverting the beam (15, 18) of electromagnetic radiation onto the surface (50) of the layer (1) to be solidified,
characterized by
a control device (19, 60) for controlling the velocity (v) of the beam (18) as a function of the length (L) of the path which is to be covered in each case.

## Revendications

1. Procédé pour fabriquer un objet tridimensionnel (7) dans leque l'objet (7) est généré par consolidation successive de couches (1) individuelles d'un matériau (8) consolidable aux endroits correspondant à la section transversale de l'objet sous l'action d'un rayon (18) à rayonnement électromagnétique, caractérisé en ce que, lors de l'irradiation d'une couche, le rayon (18) est guidé sur la couche (1) sur plusieurs voies juxtaposées, la vitesse (v) à laquelle le rayon est guidé sur une voie, dépendant de la longueur (L) de la voie respective.

2. Procédé selon la revendication 1, caractérisé en ce que la vitesse (v) du rayon diminue avec la longueur (L) croissante de la voie.

3. Procédé selon la revendication 1 ou 2, caractérisé en ce que les voies sont des lignes parallèles l'une à l'autre et disposées à une distance (d) l'une de l'autre.

4. Procédé selon la revendication 3, caractérisé en ce que deux lignes sont respectivement reliées l'une à l'autre à leurs extrémités de telle sorte qu'il se forme une structure linéaire (2) en forme de méandres.

5. Procédé selon l'une quelconque des revendications 1 à 4, caractérisé en ce que la vitesse (v) pour chaque voie est choisie de telle sorte que la couche présente une densité homogène après la consolidation.

6. Procédé selon la revendication 5, caractérisé en ce que la vitesse (v) pour chaque longueur de voie est déterminée expérimentalement tandis que plusieurs corps de test carrés présentant des hauteurs et largeurs identiques mais cependant des longueurs différentes sont consolidés en utilisant des vitesses respectivement différentes de telle sorte qu'ils présentent une densité identique.

7. Procédé selon la revendication 6, caractérisé en ce que, pour une densité souhaitée de l'objet (7) à fabriquer, il est établi un tableau de valeurs entre la longueur (L) et la vitesse (v) et en ce qu'une interpolation a lieu entre les valeurs mesurées.

8. Procédé selon l'une quelconque des revendications 1 à 7, caractérisé en ce que le matériau (8) consolidable utilisé est un matériau sous forme de poudre métallique, céramique ou plastique ou de sable de moulage se composant de sable quartzeux avec un enrobage de résine synthétique.

9. Procédé selon l'une quelconque des revendications 1 à 7, caractérisé en ce que le matériau (8) utilisé est un fluide photodurcissant.

10. Procédé selon l'une quelconque des revendications 1 à 9, caractérisé en ce que le rayon (18) utilisé est un rayon laser.

11. Dispositif d'exécution d'un procédé selon l'une quelconque des revendications 1 à 10 comportant
un support (6) pour soutenir l'objet (7) à former,
un dispositif d'application (11) pour l'application de couches du matériau (8) à consolider sur le support (6) ou sur une couche consolidée au préalable,
un générateur de rayons (14) pour générer un rayon à rayonnement électromagnétique,
un dispositif de déviation (16) pour dévier le rayon (15, 18) à rayonnement électromagnétique sur la surface (50) de la couche (1) à consolider, caractérisé en ce qu'il est prévu un dispositif de commande (19, 60) pour la commande de la vitesse (v) du rayon (18) en fonction de la longueur (L) de la voie respective à couvrir.
